Europäisches Patentamt

(19) European Patent Office

Office européen des brevets

(11) Numéro de publication: **0 006 777**
**B1**

(12) **FASCICULE DE BREVET EUROPEEN**

(45) Date de publication du fascicule de brevet: **14.10.81**

(51) Int. Cl.³: **C 08 F 2/46** //B01D21/02

(21) Numéro de dépôt: **79400341.8**

(22) Date de dépôt: **30.05.79**

(54) **Procédé de préparation de polymères utilisables comme floculants.**

(30) Priorité: **09.06.78 FR 7817857**

(43) Date de publication de la demande:
**09.01.80 Bulletin 80/1**

(45) Mention de la délivrance du brevet:
**14.10.81 Bulletin 81/41**

(84) Etats Contractants Désignés:
**BE DE FR GB IT LU NL SE**

(56) Documents cités:
**DE - A - 2 546 279**
**FR - A - 2 327 258**

(73) Titulaire: **RHONE-POULENC INDUSTRIES**
**22, avenue Montaigne**
**F-75008 Paris (FR)**

(72) Inventeur: **Boutin, Jean**
**7, rue Buzy**
**F-69780 Mions (FR)**
Inventeur: **Neel, Jean**
**62, rue Lieutenant Colonel Prévost**
**F-69006 Lyon (FR)**

(74) Mandataire: **Cazes, Jean-Marie et al,**
**RHONE POULENC Service Brevets Chimie et**
**Polymères B.P. 753**
**F-75360 Paris Cedex 08 (FR)**

Courier Press, Leamington Spa, England.

## Procédé de préparation de polymères utilisables comme floculants

La présente invention concerne un procédé de préparation de polymères organiques utilisables comme floculants.

Il est bien connu de préparer des floculants par photopolymérisation de monomères acryliques, notamment d'acrylamide, méthacrylamide, d'acides acrylique ou méthacrylique éventuellement salifiés et de sels d'ammonium dérivés des (méth)acrylate de dialcoyle aminoalcoyle.

On requiert habituellement de ces floculants organiques qu'ils soient solubles dans l'eau, qu'ils aient un haut poids moléculaire (donc une haute viscosité intrinsèque) qu'ils se dissolvent rapidement dans l'eau, qu'ils ne laissent pas de résidu insoluble lors de leur dissolution dans l'eau.

Sur le plan du procédé de préparation de ces floculants organiques on cherche à ce que la polymérisation ait lieu avec des solutions aussi concentrées que possible (pour accroitre la productivité de l'appareillage) mais on cherche à évacuer au mieux les calories dégagées lors de la photopolymérisation afin de maintenir une température de polymérisation aussi basse que possible pour éviter la dégradation du poids moléculaire et éventuellement la formation de fractions insolubles dans l'eau; on cherche encore à ce que la polymérisation soit aussi avancée que possible afin que la teneur en monomère(s) résiduel(s) dans le floculant soit aussi basse que possible.

Le procédé de l'invention se situe donc plus particulièrement dans le cadre d'un procédé de préparation de floculants organiques par photopolymérisation de monomères, initialement en solution aqueuse, mis sous forme d'une couche mince déposée sur un support mobile.

Lorsqu'on procède ainsi à la photopolymérisation d'une solution aqueuse de monomère, on voit la viscosité de cette solution augmenter progressivement; la solution fluide devient de plus en plus visqueuse puis se transforme en gel, puis en couche à consistance caoutchouteuse et/ou dans certains cas, en couche dure.

Comme il a déjà été dit on recherche spécialement les polymères floculants hydrosolubles exempts de fractions insolubles. Malheureusement, bien des modalités opératoires ont tendance à favoriser la production de fractions insolubles dans l'eau. Parmi les modalités ayant cette tendance on peut citer:

. l'augmentation de la durée et/ou de l'intensité de l'irradiation pour diminuer le taux de monomère(s) résiduel(s) dans le floculant.

. l'accélération de la photopolymérisation par les moyens les plus divers

. l'élévation de la concentration des solutions aqueuses soumises à irradiation

. les conditions opératoires favorisant l'obtention de polymères à haut poids moléculaire (c'est-à-dire à haute viscosité intrinsèque).

. l'utilisation de lampes d'irradiation UV à puissance calorifique élevée (notamment les lampes à mercure à haute pression)

. l'abaissement du pH de milieu de photopolymérisation, notamment l'abaissement accidentel de ce pH.

Il semble par ailleurs que les fractions insolubles, lorsqu'il y en a, n'ont pas toutes le même aspect ou le même caractère. Certaines ont un aspect floconneux ou gélatineux. D'autres ont un aspect feuilleté, souvent incurvé, qu'on appelle "pelure d'oignons".

Enfin même si l'on définit un procédé comme étant capable de produire des polymères parfaitement hydrosolubles, lorsqu'un tel procédé est mis en oeuvre à l'échelle industrielle il peut arriver que de légères modifications (accidentelles) des conditions opératoires conduisent de temps à autre à la production de fractions insolubles ou plus difficilement solubles dans l'eau.

Un but de l'invention est de fournir un procédé perfectionné de préparation de polymères floculant par photopolymérisation en couche mince.

Un autre but de l'invention est de fournir un procédé de préparation de polymères floculants ayant le moins de fractions insolubles possibles, notamment de fractions insolubles produites à la suite de modifications accidentelles et/ou imprévues des conditions de fabrications.

Un but encore de l'invention est de fournir un procédé de préparation de polymères floculant ayant une plus grande souplesse c'est-à-dire permettant d'accéder à des floculants exempts de fractions insolubles dans l'eau dans une large gamme de conditions opératoires.

Un ature but de l'invention est d'éviter la formation de fractions insolubles du type "pelure d'oignons".

Il a maintenant été trouvé que ces divers buts, et d'autres encore, pouvaient être atteints grâce au procédé selon l'invention.

Ce procédé est caractérisé en ce que l'on soumet à irradiation ultraviolette une solution aqueuse de monomère(s) oléfiniquement insaturé(s) sous forme d'une couche mince déposée sur un support mobile disposé sous la source d'irradiation, et que l'atmosphère surmontant le milieu de photopolymérisation est maintenu humide pendant toute la durée de l'irradition y compris lorsque, sous l'effet de la polymérisation, la solution aqueuse s'est transformée jusqu'à être à l'état solide (par état solide on entend, selon le sens ordinaire, un état non liquide, même non visqueux).

Par atmosphère humide, on entend une atmosphère contenant une proportion de vapeur d'eau telle que, ramené à la température ambiante (23°C), cette teneur en eau soit supérieure à 50%, de préférence supérieure à 80% de la saturation en vapeur d'eau à la température ambiante à 23°C. Bien entendu cette teneur en eau est par ailleurs inférieure ou égale à la teneur en vapeur d'eau à la saturation à la température réelle régnant au-dessus du milieu de photopolymérisation.

L'atmosphère peut être de toute nature. Généralement il s'agit soit d'air, soit de gaz inerte lorsqu'on cherche à éviter la présence d'oxygène. Comme gaz inertes (vis à vis de la polymérisation), on peut citer l'azote et l'argon. Une atmosphère débarassée d'oxygène (moins de 5% en volume de préférence moins de 0,5%) est souvent souhaitée mais on peut aussi opérer en présence d'oxygène notamment avec des adjuvants adéquats ou en fin d'irradiation lorsque la teneur en monomère résiduel est faible.

Un moyen commode d'obtenir une atmosphère humide telle que définie ci-dessus consiste à faire circuler un courant gazeux (balayage) au-dessus du milieu liquide ou solide de photopolymérisation, ce courant gazeux ayant préalablement barboté (bullage) dans un milieu aqueux liquide, de préférence constitué par de l'eau. La température du liquide aqueux où a lieu le barbotage peut varier évidemment dans de larges limites mais il est plus simple de choisir la température ordinaire du local où s'effectue le procédé de l'invention ce qui évite tout chauffage ou refroidissement particulier. Bien entendu la température de liquide aqueux où a lieu le barbotage peut être modifiée en fonction du degré d'humidité particulier souhaité.

Selon une modalité préférée, la vitesse de balayage d'atmosphère humide surmontant le milieu de photopolymérisation est supérieure à 0,1 m/s et, plus avantageusement supérieure à 1 m/s.

La longueur d'onde du rayonnement d'irradiation est généralement comprise entre 150 et 500 m$\mu$ (rayonnement UV) de préférence entre 300 et 450 m$\mu$.

Le procédé de l'invention est avantageusement mis en oeuvre en continu, en sorte que le solution aqueuse de monomère(s) est déposée en continu sur le support mobile.

La solution de monomère initialement mis en oeuvre contient de préférence un promoteur de photopolymérisation et, éventuellement, un adjuvant de photopolymérisation.

Les monomères oléfiniquement insaturés utilisés sont, à raison d'au moins 50% en poids, de préférence au moins 80% en poids, des monomères acryliques.

Comme monomères spécialement utilisables dans l'invention, on peut citer spécialement l'acrylamide, le méthacrylamide; les acides acrylique, méthacrylique, méthallylsulfonique, vinylbenzènesulfonique et leurs sels ou esters, notamment les sels alcalins; la N-vinyl-pyrrolidone; la méthyl-2 vinyl-5 pyridine et les acrylates et méthacrylates d'aminoalcoyle, ces composés étant de préférence quaternisés et, le cas échéant ayant de préférence de 4 à 16 atomes de carbone dans la partie aminoalcoyle quaternisée; l'utilisation de ces monomères isolés ou en mélange conduit à des floculants homopolymères ou copolymères, la nature et la proportion de ces monomères étant évidemment choisies de manière à obtenir des polymères hydrosolubles; c'est ainsi que l'acrylonitrile et le méthacrylonitrile peuvent aussi être utilisés comme comonomères mais on préfère limiter leur teneur par rapport aux autres monomères à moins de 3% en poids.

Les monomères préférés sont l'acrylamide, l'acide acrylique et ses sels alcalins et les méthacrylates de dialcoylaminoalcoyle quaternisés (forme chlorure ou sulfate).

La concentration de la solution aqueuse de monomère soumise à photopolymérisation est comprise entre 30 et 90% en poids.

Avec l'acrylamide et les acrylates la concentration est comprise entre 30 et 70%, de préférence entre 40 et 60%.

Avec les sels d'ammonium quaternisés, notamment aux dérivés de méthacrylates d'aminoalcoyle la concentration est comprise entre 40 et 90% en poids, de préférence entre 70 et 88%.

Avec l'acrylamide associé aux sels quaternisés de méthacrylates d'aminoalcoyle, la concentration de la solution aqueuse de monomères est comprise entre 40 et 70% en poids, de préférence entre 45 et 65%.

Les promoteurs de photopolymérisaton, également appelés photoinitiateurs, sont de type connue en soi. On peut citer notamment le diacétyle, le dibenzoyle, la benzophénone, la benzoïne et ses alcoyléthers notamment ses éthers méthylique, éthylique, propylique, isopropylique. La teneur en photoinitiateur de la solution de monomères initiale soumise à photopolymérisation est comprise entre 0,005 et 1% en poids du ou des monomères, de préférence entre 0,01 et 0,5%. On peut aussi utiliser les adjuvants de photopolymérisation anthraquinoniques comme décrit dans le brevet 2 327 258.

Le support mobile sur lequel est déposé la solution aqueuse de monomère à photo-polymériser est constitué par une bande sans fin ou, dans certains cas, par plusieurs bandes sans fin successives (la deuxième bande n'intervenant qu'après solidification de milieu photopolymérisé). L'épaisseur de la couche de solution aqueuse soumise à photopolymérisation est comprise entre 2 et 20 mm, de préférence entre 3 et 8 mm. Le support mobile est préférentiellement un support hydrofuge; on peut citer comme matériau convenant comme support les polyperfluorooléfines (homo ou copolymères), les métaux recouverts ou non d'un film plastique hydrofuge tel que, par exemple, un film de polyester.

Dans le but d'éliminer la chaleur produite par la photopolymérisation, il est habituel de refroidir le support mobile de photopolymérisation. Ce refroidissement s'effectue commodément sur la face inférieure du support mobile, de préférence par arrosage à l'eau froide. On maintient la température du milieu de polymérisation inférieure à 70°C, de préférence inférieure à 60°C. Cependant, on peut s'abstenir de procéder à un refroidissement notamment lorsqu'une partie importante des monomères est déjà polymérisée, par exemple lorsque la teneur en monomère résiduel est inférieure à 10%, de préférence inférieure à 2% (en poids par rapport à la masse soumise à photopolymérisation).

Le pH des solutions aqueuses de monomères soumises à photopolymérisation est compris entre 4 et 13. La valeur plus particulière du pH dépend de divers facteurs, notamment des monomères particuliers mis en oeuvre et du poids moléculaire vers lequel on tend, et aussi des impuretés propres aux monomères. Généralement en élevant le pH on tend à éviter la réticulation de plus hauts poids moléculaires (la réticulation produisant des fractions insolubles) mais un pH trop élevé n'est pas souhaitable notamment lorsque les monomères sont sensibles à la saponification.

Selon ce qui a été dit plus haut, l'invention consiste à soumettre à photopolymérisation une solution aqueuse de monomères oléfiniquement insaturés dans les conditions qui ont été définies. Il est cependant bien entendu et bien évident que c'est seulement initialement que le milieu de photopolymérisation est à l'état de solution aqueuse avec la nature et les concentrations sus-définies: par contre au fur et à mesure de l'avancement de la polymérisation, le milieu de photopolymérisation devient de plus en plus visqueux jusqu'à devenir solide, et l'atmosphère le surmontant doit constamment présenter l'humidité qui a été définie plus haut.

La photopolymérisation elle-même peut être effectuée en une ou plusieurs phases; on peut procéder à l'irradiation UV jusqu'à ce que le taux de monomères résiduels ait atteint la valeur souhaitée. En fin d'irradiation, comme cela a déjà été dit, on peut par exemple irradier sans refroidir la bande mobile support et en présence d'oxygène.

Les exemples suivants donnés à titre non limitatif illustrent l'invention et montrent comment elle peut être mise en oeuvre.

### Exemple 1

Dans un bac de dissolution on réalise la solution suivante:

. 68,7 kg d'eau déminéralisée
. 45,6 kg d'acrylamide
. 16,9 kg d'acide acrylique
. 18,8 kg de soude aqueuse à 50% en poids.

Cette solution est alimentée en tête d'une colonne à garnissage; dans cette même colonne on introduit, en tête de colonne une solution diluée de soude à 30% permettant de réguler le pH à 13, au milieu de la colonne un débit de 88 cm3/h de solution à 34 g/l d'éther isopropylique de la benzoïne dans l'acide acrylique, en bas de colonne un débit d'azote suffisant pour maintenir la teneur en oxygène dissous du liquide sortant en bas de colonne inférieure ou égale à 0,15 mg d'oxygène par litre de solution.

La solution aqueuse désaérée de monomère s'écoule en continu avec un débit de 31 l/h sur une bande d'acier inoxydable de 48 cm de large comportant deux bords latéraux similaires pour éviter l'écoulement latéralement. De plus la bande est très légèrement inclinée dans le sens du déroulement pour éviter l'écoulement de la solution vers l'arrière. L'atmosphère gazeuse au-dessus de la bande est délimitée par des plaques de verre (hauteur: 3 cm) et est constituée par un courant d'azote (2 m3/h) humidifié par barbotage à température ambiante dans un flacon laveur contenant 3 litres d'eau. La bande métallique se déplace à une vitesse de 24 cm par minute environ. A cette vitesse l'épaisseur de la couche de solution de monomère est de 4,5 mm environ. La bande refroidie à sa partie inférieure par de l'eau à 15°C est soumise sur une longueur de 3,6 m à une irradiation par 8 lampes à vapeur de mercure haute pression ayant chacune une puissance électrique de 2000 watts (de marque Philips HTQ 7). Ces 8 lampes sont disposées dans le sens de déroulement de la bande et à 10 cm au dessus d'elle.

Après 15 minutes d'irradiation, on obtient un film plastique qui se détache de la bande par simple traction.

Le film est ensuite cassé en fragments dans un hachoir, séché 15 min à 85°C environ puis broyé sous forme de poudre. On détermine les propriétés du polymère soit sous forme de poudre soit sous forme de fragments.

On prépare une solution à 5 g/litre dans de l'eau déminéralisée par agitation lente au moyen d'un agitateur magnétique à température ambiante (20°C environ).

On cherche par filtration de la solution ainsi préparée sur un verre fritté dont le diamètre des pores est compris entre 90 et 150 $\mu$, la présence d'insolubles. On ne constate aucun dépôt.

A partir de cette même solution et d'une autre solution contenant en plus 50 g/l de NaCl, on mesure la viscosité Brookfield à 20°C et à 10 t/mn avec les cuves et modèles N° 1 ou 3 selon la viscosité de la solution.

On a obtenu les mêmes résultats suivants sur la poudre finale:

. viscosité Brookfield
  —solution aqueuse        3000 mPa.s
  —solution saline          200 mPa.s
. viscosité intrinsèque       14 dl/g

Monomère résiduel (acrylamide): 0,4% (par rapport au polymère sec).

Exemple 2

Le film plastique obtenu après 15 mh d'irradiation dans l'exemple 1 est détaché du support de polymérisation (bande mobile) et reporté sur une 2ème support mobile métallique (grillage) qui avance à la vitesse de 24 cm/min. Ce support, non refroidi, est soumis à une postirradiation sous écran de verre à l'aide de lampes à mercure basse pression (marque Philips TLAK 40 w/05) disposées perpendiculairement au sens de déroulement de support. Il y a au total 96 lampes disposées sur une longueur de 14,5 m. L'ensemble de l'appareillage de postirradiation est enfermé dans une enceinte balayée par un courant d'air humide ayant barboté dans de l'eau comme l'azote de l'exemple 1.

Le film est ensuite (comme à l'exemple 1) haché, séché, broyé et analysé. On obtient une poudre ayant les mêmes caractéristiques qu'à l'exemple 1 sauf que la teneur en monomère résiduel est inférieure à 0,05%.

## Revendications

1. Procédé de préparation de polymères organiques par irradiation ultraviolette d'une solution aqueuse de monomère(s) oléfiniquement insaturé(s) sous forme de couche mince déposée sur un support mobile disposé sous la source d'irradiation, caractérisé en ce que l'atmosphère surmontant le milieu de photopolymérisation est maintenue humide pendant toute la durée de l'irradiation y compris lorsque, sous l'effet de la polymérisation, la solution aqueuse s'est transformée jusqu'à être à l'état solide.

2. Procédé selon la revendication 1 caractérisé en ce que l'atmosphère humide contient une proportion de vapeur d'eau supérieure à 50%, de préférence supérieure à 80%, de la saturation en vapeur d'eau à température ambiante.

3. Procédé selon l'une des revendications 1 et 2 caractérise en ce que l'atmosphère humide est obtenue en faisant circuler au dessus du milieu de photopolymérisation un courant gazeux ayant préalablement barboté dans de l'eau.

4. Procédé selon l'une des revendications 1 à 3 caractérise en ce que le pH de la solution aqueuse est initialement compris entre 4 et 13 et que la longueur d'onde d'irradiation est comprise entre 150 et 500 m$\mu$, de préférence entre 300 et 450 m$\mu$, et que les monomères sont des monomères acryliques à raison de plus de 50% en poids de l'ensemble des monomères mis en oeuvre, de préférence plus de 80%.

5. Procédé selon l'une des revendications 1 à 4 caractérisé en ce que la couche mince a une épaisseur comprise entre 2 et 20 mm, de préférence entre 3 et 8 mm.

6. Procédé selon l'une des revendications 1 à 5 caractérisé en ce que les monomères sont choisis dans le groupe constitué par l'acrylamide, le méthacrylamide; les acides acrylique, méthacrylique, méthallylsulfonique vinylbenzènesulfonique et leurs sels ou esters; la N-vinyl pyrrolidone; la méthyl-2 vinyl-5 pyridine et les acrylates et méthacrylates d'amino alcoyle quaternisés; et que la concentration de la solution aqueuse de monomères est comprise entre 30 et 90% en poids.

7. Procédé selon la revendication 6 caractérisé en ce que les monomères sont choisis dans le groupe comprenant l'acrylamide, les acides acryliques et leurs sels alcalins; les méthacrylate d'aminoalcoyle quaternisés ayant de 4 à 16 atomes de carbone dans la partie aminoalcoyle quaternisée.

8. Procédé selon l'une des revendications 1 à 7 caractérisé en ce que pendant tout ou partie de la photopolymérisation le support mobile est refroidi pour éliminer les calories issues de la polymérisation et que la teneur en oxygène de l'atmosphère surmontant le milieu de photopolymérisation est inférieure à 5% en volume, de préférence inférieure à 0,5%.

9. Procédé selon la revendication 8 caractérisé en ce que l'on procède en outre à une autre phase d'irradiation sans refroidir et encore en présence d'air humide lorsque la teneur en monomère résiduel est faible.

10. Procédé selon la revendication 9 caractérisé en ce que la deuxième phase d'irradiation a lieu lorsque la teneur en monomère résiduel est inférieure à 10%, de préférence inférieure à 2%.

## Claims

1. Process for the preparation of organic polymers by ultraviolet irradiation of an aqueous solution of olefinically unsaturated monomer(s) in the form of a thin layer deposited on a mobile substrate placed under the source of irradiation, characterised in that the atmosphere surmounting the photopolymerisation medium is kept moist throughout the duration of the irradiation, including the period when, under the effect of the polymerisation, the aqueous solution has been converted as far as the solid state.

2. Process according to Claim 1, characterised in that the moist atmosphere contains a proportion of water vapour of more than 50%, preferably of more than 80%, of the water vapour saturation at ambient temperature.

3. Process according to one of Claims 1 and 2, characterised in that the moist atmosphere is obtained by circulating, above the photopolymerisation medium, a stream of gas which has been bubbled through water beforehand.

4. Process according to one of Claims 1 to 3, characterised in that the pH of the aqueous solution is initially between 4 and 13, in that the irradiation wavelength is between 150 and 500 m$\mu$, preferably between 300 and 450 m$\mu$, and

in that the monomers are acrylic monomers to the extent of more than 50% by weight of all the monomers used, preferably more than 80%.

5. Process according to one of Claims 1 to 4, characterised in that the thin layer has a thickness of between 2 and 20 mm, preferably of between 3 and 8 mm.

6. Process according to one of Claims 1 to 5, characterised in that the monomers are chosen from the group comprising acrylamide and methacrylamide, acrylic, methacrylic, methallylsulphonic and vinylbenzenesulphonic acids and their salts or esters, N-vinyl-pyrrolidone; 2-methyl-5-vinylpyridine and quaternised aminoalkyl acrylates and methacrylates, and in that the concentration of the aqueous solution of monomers is between 30 and 90% by weight.

7. Process according to Claim 6, characterised in that the monomers are chosen from the group comprising acrylamide, acrylic acids and their alkali metal salts and quaternised aminoalkyl methacrylates having from 4 to 16 carbon atoms in the quaternised aminoalkyl part.

8. Process according to one of Claims 1 to 7, characterised in that, during all or part of the photopolymerisation, the mobile substrate is cooled in order to remove the heat produced by the polymerisation, and in that the oxygen content of the atmosphere surmounting the photopolymerisation medium is less than 5% by volume, preferably less than 0.5%.

9. Process according to Claim 8, characterised in that another irradiation stage is also carried out, without cooling and still in the presence of moist air if the content of residual monomer is low.

10. Process according to Claim 9, characterised in that the second irradiation stage takes place if the proportion of residual monomer is less than 10%, preferably less than 2%.

## Patentansprüche

1. Verfahren zur Herstellung von organischen Polymeren durch ultraviolette Bestrahlung einer wäßrigen Lösung von olefinisch ungesättigtem(n) Monomeren in Form einer dünnen Schicht, welche auf einem mobilen Träger abgelagert ist, der unter der Strahlungsquelle angeordnet ist, dadurch gekennzeichnet, daß die über dem Photopolymerisationsmilieu befindliche Atmosphäre während der gesamten Dauer der Bestrahlung feucht gehalten wird einschließlich dann, wenn die wäßrige Lösung unter der Einwirkung der Polymerisation sich umwandelt in den festen Zustand.

2. Verfahren gemäß Anspruch 1, dadurch gekennzeichnet, daß die feuchte Atmosphäre einen Anteil an Wasserdampf höher als 50%, vorzugsweise höher als 80% der Wasserdampfsättigung bei gewöhnlicher Temperatur enthält.

3. Verfahren gemäß den Ansprüchen 1 und 2, dadurch gekennzeichnet, daß die feuchte Atmosphäre erhalten wird, indem über dem Photopolymerisationsmilieu ein Gasstrom zirkulieren gelassen wird, der vorher durch Wasser hindurch geleitet wurde.

4. Verfahren gemäß einem der Ansprüche 1 bis 3, dadurch gekennzeichnet, daß der pH-Wert der wäßrigen Lösung zunächst zwischen 4 und 13 liegt und daß die Wellenlänge der Bestrahlung zwischen 150 und 500 m$\mu$, vorzugsweise zwischen 300 und 450 m$\mu$ beträgt und daß die Monomeren Acrylmonomere in einer Menge von mehr als 50 Gew.-% der Gesamtheit der eingesetzten Monomeren, vorzugsweise mehr als 80% sind.

5. Verfahren gemäß einem der Ansprüche 1 bis 4, dadurch gekennzeichnet, daß die dünne Schicht eine Dicke zwischen 2 und 20 mm, vorzugsweise zwischen 3 und 8 mm besitzt.

6. Verfahren gemäß einem der Ansprüche 1 bis 5, dadurch gekennzeichnet, daß die Monomeren ausgewählt sind aus der Gruppe bestehend aus Acrylamid, Methacrylamid; Acryl-säuren, Methacrylsäuren, Methallylsulfon-säuren, Vinylbenzolsulfonsäuren und ihren Salzen oder Estern; N-Vinylpyrrolidon; 2-Methyl-5-vinylpyridin und den quaternisierten Aminoalkylacrylaten und -methacrylaten; und daß die Konzentration der wäßrigen Lösung der Monomeren zwischen 30 und 90 Gew.-% beträgt.

7. Verfahren gemäß Anspruch 6, dadurch gekennzeichnet, daß die Monomeren ausgewählt sind aus der Gruppe umfassend Acrylamid, die Acrylsäuren und ihre Alkalisalze; die quaternisierten Aminoalkylmethacrylate mit 4 bis 16 Kohlenstoffatomen im quaternisierten Aminoalkylteil.

8. Verfahren gemäß einem der Ansprüche 1 bis 7, dadurch gekennzeichnet, daß während der ganzen oder eines Teils der Photopolymerisation der bewegliche Träger gekühlt wird, um die von der Polymerisation herrührenden Kalorien zu entfernen und daß der Gehalt an Sauerstoff der über dem Photopolymerisationsmilieu befindlichen Atmosphäre unter 5 Vol.-%, vorzugsweise unter 0,5 Vol.-% beträgt.

9. Verfahren gemäß Anspruch 8, dadurch gekennzeichnet, daß man darüberhinaus zu einer anderen Bestrahlungsphase ohne Abkühlung und noch in Gegenwart feuchter Luft schreitet, wenn der Gehalt an Restmonomerem gering ist.

10. Verfahren nach Anspruch 9, dadurch gekennzeichnet, daß die zweite Bestrahlungsphase stattfindet, wenn der Gehalt an Restmonomerem unterhalb 10%, vorzugsweise unterhalb 2% liegt.